# EUROPEAN PATENT APPLICATION

(11) **EP 1 974 781 A2**
(43) Date of publication of application: **01.10.2008**
(21) Application number: 08153014.9
(22) Date of filing: 19.03.2008
(51) Int. Cl.: B01D 1/16, B01D 3/10

(54) **Vacuum distillation method and vacuum distillation apparatus**

(30) Priority: 23.03.2007 JP 2007077558
(71) Applicant: Sanyo Electric Co., Ltd., Osaka 570-8677 (JP); SANYO Electric Techno Create Co., Ltd., Moriguchi City Osaka 570-8677 (JP)
(72) Inventor: Noro, Masaru, Osaka Osaka 570-8677 (JP); Nakagawa, Katsuhito, Osaka Osaka 570-8677 (JP); Yamaguchi, Akira, Osaka Osaka 570-8677 (JP)
(74) Representative: Hoeger, Stellrecht & Partner Patentanwälte

(57) **Abstract**

An objective of the present invention is to suppress bumping in the distillation still so as to collect a high purity solvent containing no impurities. A solvent vapor valve 21 is disposed in a solvent vapor withdrawal conduit 20 through which solvent vapor is transferred from inside the distillation still 10 to an inner pipe 31 of a double-tube structure 30 which is a heat exchange section. Also, a thermistor 14 is disposed in an upper space in the distillation still 10. After a heating chamber 11 starts heating the solvent, the start of boiling is determined by a sudden rise in temperature detected by the thermistor 14, and shortly thereafter, the solvent vapor valve 21 is closed to fill the distillation still 10 with the solvent vapor. The solvent vapor actively generated by bumping is condensed and liquefied on the cold inner surfaces of a ceiling wall and a sidewall of the distillation still 10, and concurrently, the heat of condensation is provided to the ceiling wall surface and the sidewall surface, thereby accelerating the temperature rise thereof. Bumping stops when the temperatures of the surfaces of the ceiling wall and the sidewall have reached a sufficiently high temperature, and thereafter the valve 21 is opened to transfer the solvent vapor to the double-tube structure 30 functioning as the heat exchange section.

## Description

The present invention relates to a vacuum distillation method and a vacuum distillation apparatus used to purify a liquid to be treated, for example, such as a solvent used in a dry cleaning machine and a solvent utilized to clean various kinds of electronic components.

### BACKGROUND OF THE INVENTION

In a dry cleaning machine used in cleaners and similar establishments, a vacuum distillation apparatus for purifying a solvent is used to recycle a solvent (silicon oil, petroleum solvent and the like) contaminated by laundry cleaning. For example, a vacuum distillation apparatus disclosed in Patent Document 1 is equipped with a distillation still having a heater section at the bottom; a decompressor including a buffer tank to store a solvent and a pump which vacuums up and pressurizes the solvent in the buffer tank to circulate the solvent through an ejector; and a condenser (heat exchange section) including a cooling portion to cool the solvent in the buffer tank and a cooling conduit to allow solvent vapor to pass through. In the vacuum distillation apparatus, the decompressor reduces the pressure in the distillation still, and the solvent vapor generated by heating under the reduced pressure is cooled to be later condensed and liquefied by the condenser. The condensed and liquefied solvent is then collected in the buffer tank through the ejector.

In the vacuum distillation apparatus of this kind, the heat source is disposed at the bottom of the distillation still. A solvent introduced into the distillation still is heated to boiling state by the heat source, and solvent vapor is vigorously generated. The solvent vapor is drawn out from the distillation still, and then transferred to the heat exchange section. The boiling state of the solvent in the distillation still at the beginning of distillation is different between the cases where the distillation is performed for the first time after a long period of time in which the distillation apparatus was not in use and where the distillation has been continuously and repeatedly performed; and in the former case, a sudden boiling, i.e. bumping, is empirically known to occur more frequently. The occurrence of bumping in the presence of a great amount of impurities such as sludge, soap and a water repellent agent in the distillation still easily generates an abnormally large amount of foam while boiling. If the foam containing the impurities reaches the heat exchange section, the distilled solvent will also contain the impurities when it is finally collected.

In a vacuum distillation apparatus utilizing a decompressor provided with a pump and an ejector as the one disclosed in Patent Document 1, inclusion of soap into a solvent in the buffer tank induces abnormal foaming of the solvent in the buffer tank, leading to cavitation in the pump. As a result, the problem of failure to reduce pressure occurs.

For the aforementioned reasons, efforts have been made to develop a vacuum distillation apparatus having a means to prevent bumping or to prevent intrusion of impurities caused by bumping.

As a method to prevent the intrusion of impurities accompanying bumping, for example, there has been a method known in which an optical sensor checks abnormal foaming caused by bumping in the distillation still. When the presence of abnormal foam is detected, air is introduced into the distillation still for a short period of time. As a result, the degree of vacuum is reduced so that boiling is stopped. However, even if boiling is once stopped and then distillation is resumed by reducing the pressure in the distillation still, abnormal foaming due to bumping possibly occurs again. Accordingly, the aforementioned method does not reliably stop bumping; in a worse case, it may lead to reduction of work efficiency.

[Patent Document 1] Japanese Unexamined Patent Application Publication No. 2006-141546

### SUMMARY OF THE INVENTION

To solve the aforementioned problems, the present invention provides a vacuum distillation method and a vacuum distillation apparatus which can reliably prevent such an abnormal foaming as to transfer impurities to the heat exchange section, or prevent bumping that causes abnormal foaming.

Conventionally, preventive measures to reliably prevent bumping from occurring have not been taken. This is primarily because the basic cause of bumping in a distillation still was not known. On the other hand, the present inventors clarified the major cause of the bumping, and based on those findings, have achieved a vacuum distillation method and a vacuum distillation apparatus to prevent such occurrences. The following description will discuss the major causes of such bumping conditions.

In order to evaporate (boil) a solvent as part of the distillation process, the solvent is introduced into the distillation still by an appropriate volume (e.g. approximately one-third of the capacity of the distillation still) and decompression is performed (to lower the boiling point of the solvent), and concurrently the bottom portion of the distillation still is heated. On this occasion, the reduction of the pressure induces the evaporation of the solvent attached on the inner surfaces of the sidewall and the ceiling wall of the distillation still, leading to vaporization heat loss from those wall surfaces. As a result, the temperatures of those wall surfaces tend to rise slower than the bottom portion. Moreover, in the case of vacuum distillation, since the molecular density of the air that contributes to the heat transfer is low, a temperature rise of the wall surfaces due to the heat transfer cannot be greatly expected. In particular, the temperature difference is significantly large when the distillation process is started using a distillation still which has been fully cooled such as, for example, when the distillation still is started-up in the morning; the temperature of the upper side surfaces of the inner walls of the distillation still rises only to approximately 60°C immediately before the solvent starts boiling, whereas the temperature of the bottom portion of the distillation still rises approximately to 120°C.

When the solvent starts boiling in the aforementioned situation, the evaporated solvent vapor is cooled to be condensed and liquefied on the inner surfaces of the ceiling wall or the sidewall of the distillation still, causing a sudden drop of the pressure therein. Consequently, the boiling point of the solvent is abruptly decreased, causing a burst of vigorous boiling, and thus bumping occurs. Since the heat of condensation is transferred to the inner surfaces of the ceiling wall and the sidewall of the distillation still upon condensation of the solvent vapor, the inner surfaces of the ceiling wall and the sidewall are gradually warmed so that the temperatures thereof are raised, and when the temperature has risen to the point where no further condensation occurs, bumping stops and the boiling state returns to normal. On the other hand, in the case where the distillation process is continuously repeated, the inner surfaces of the ceiling wall and the sidewall of the distillation still are already warmed to some extent at the start of boiling of the solvent (i.e. preheated) by a prior distillation process. Therefore, when the solvent starts boiling, condensation of the solvent vapor on the inner surfaces of the ceiling wall and the sidewall as described previously does not occur, and thus no bumping occurs.

Similar conditions also occur in the heat exchange section or in a connection pipe section connecting the distillation still and the heat exchange section. That is, after the vacuum distillation apparatus has long been left unused, the heat exchange section and the connection pipe section are completely cold. Introduction of the solvent vapor into those sections causes sudden condensation of the solvent, which is followed by a chain reaction of an abrupt drop of gas pressure and the lowering of the boiling point of the solvent, and consequently bumping occurs in the distillation still.

In order to suppress bumping caused by the aforementioned factors, the first aspect of the present invention provides a vacuum distillation method for collecting a distilled liquid, including evaporating a liquid to be treated, by heating the liquid under reduced pressure in a distillation still provided with a heater section at the bottom thereof; withdrawing vapor of the liquid from the distillation still; and cooling the vapor at a heat exchange section to condense and liquefy the vapor. The vacuum distillation method is characterized in that all or part of the inner wall surfaces of the distillation still not directly heated by the heater section are warmed before the liquid to be treated is introduced into the distillation still, or before the liquid having been introduced into the distillation still is substantially distilled by heating at the heater section and cooling at the heat exchange section.

The second aspect of the present invention is a vacuum distillation apparatus that embodies the vacuum distillation method according to the first aspect of the present invention. For collecting a distilled liquid, the vacuum distillation apparatus includes a distillation still provided with a heater section at the bottom thereof for evaporating a liquid to be treated introduced into the distillation still; a decompression section to reduce the pressure in the distillation still by withdrawing gases from the distillation still through a vapor-withdrawing conduit connected to the distillation still; and a heat exchange section to cool, condense and liquefy the vapor of the liquid having been withdrawn from the distillation still by a withdrawing action of the decompression section, the heat exchange section being disposed in the vapor-withdrawing conduit. The vacuum distillation apparatus is characterized by a warming section to warm all or part of the inner wall surfaces of the distillation still not directly heated by the heater section, before the liquid to be treated is introduced into the distillation still, or before the liquid having been introduced into the distillation still is substantially distilled by heating at the heater section and cooling at the heat exchange section.

In this specification, the phrase "inner wall surfaces not directly heated by the heater section" refers specifically to the inner surface of the ceiling wall or the sidewall of the distillation still. Although it is preferable that all the inner walls not directly heated by the heater section be heated, substantially no problem arises if areas near the heater section are not heated, because those areas show a relatively larger temperature rise due to the heat transfer than areas far from the heater section.

In the vacuum distillation method according to the first aspect of the present invention and the vacuum distillation apparatus according to the second aspect of the present invention, the temperature of the cold wall surfaces inside the distillation still is raised by the warming section before impurities are transferred to the heat exchange section by foam generated by bumping, which may occur after the solvent starts boiling in the distillation still., Thus, the condensation and liquefaction of the vapor of the liquid near the wall surfaces is prevented. Accordingly, it is possible to inhibit the chain reaction of the abrupt drop of gas pressure and sudden lowering of the boiling point of the solvent in the distillation still. As a result, bumping can be prevented from occurring at least after the chain reaction is stopped so that the boiling state can be suppressed to a normal state.

In the vacuum distillation apparatus according to the second aspect of the present invention, various methods and modes can be applied for the warming section. For example, the warming section may be a supplementary heating section sharing the same heat source with the aforementioned heater section or utilizing another heat source. In more specification, the heat source may be a heat source utilizing a heating steam used in many dry cleaning distillation apparatuses or a resistance heater and the like.

On the other hand, it is possible to heat the inner surfaces of the ceiling wall and the sidewall of the distillation still by making positive use of the bumping condition. In other words, in a mode of the vacuum distillation apparatus of the present invention, the warming section may include a conduit-opening-and-closing section disposed in the vapor-withdrawing conduit between the distillation still and the heat exchange section; a boiling detection section to detect the start of the boiling of the liquid caused by heating at the heater section in the distillation still; and a control section to control the conduit-opening-and-closing section to close the vapor-withdrawing conduit for at least a predetermined period of time after the detection of the start of the boiling of the liquid in the distillation still. This apparatus is characterized in that an upper part of the inner wall surfaces of the distillation still is warmed by heat from the vapor of the liquid generated by the boiling in the distillation still.

In a situation where bumping easily occurs such as, for example, when the apparatus as a whole is cold before being driven, bumping normally occurs soon after the liquid in the distillation still starts boiling. Here, the boiling detection section detects the start of boiling. Shortly after the detection, the control section controls the conduit-opening-and-closing section to close the vapor-withdrawing conduit. Accordingly, the vapor of the liquid generated in the distillation still is prevented from flowing into the heat exchange section, and thus fills the distillation still as well as the vapor-withdrawing conduit extending from the distillation still to the conduit-opening-and-closing section. In this state, the vapor of the liquid is cooled on the inner surface of the ceiling wall, the sidewall or the like of the distillation still to be actively condensed and liquefied, and the heat of condensation transferred to the ceiling wall surface or the sidewall surface contributes to the temperature rise of those surfaces; in other words, those surfaces are heated. Although the sharp drop of the gas pressure progressing in the distillation still may induce violent bumping in the distillation still, since the vapor-withdrawing conduit has been closed, impurities mixed in the original liquid do not reach the heat exchange section.

After an adequately long period of time has passed and the temperatures of the inner surfaces of the ceiling wall and the sidewall of the distillation still are raised to sufficient temperatures, or in other words such temperatures at which condensation and liquefaction of the vapor of the liquid do not occur, bumping stops and the boiling state returns to normal. Thereafter, the control section opens the conduit-opening-and-closing section to transfer the vapor of the liquid in the distillation still to the heat exchange section through the vapor-withdrawing conduit. The vapor of the liquid is then cooled by the heat exchange section to be condensed and liquefied, and a distilled liquid is collected. In this process, since those impurities mixed in the original liquid remain in the distillation still, the collected liquid contains no impurities.

In the aforementioned mode, the boiling detection section may include a temperature detection section to detect the temperature of the upper space in the distillation still, and a determination section to recognize the start of boiling by determining a temperature rise detected by the temperature detection section. Generally, when the liquid in the distillation still starts boiling, the temperature detected by the temperature detection section rises sharply because of the exposure to the rising vapor of the liquid generated by the boiling. Based on this knowledge, the determination section can assuredly recognize the timing of the start of boiling by determining the temperature rise; for example, the determination section may check whether the temperature has risen to a specific value, or whether the varying rate of the temperature has significantly increased from the previous rate.

Moreover, in the aforementioned mode, the boiling detection section may preferably include a first temperature detection section to detect the temperature of the upper space in the distillation still; a second temperature detection section to detect the temperature of the liquid in the distillation still; and a determination section to recognize the start of boiling by determining the difference between the temperature detected by the first temperature detection section and the temperature detected by the second temperature detection section. As explained earlier, the temperature detected by the first detection section rises sharply after the onset of the boiling of the liquid, and later becomes almost the same temperature as the liquid. Based on this, the onset of the boiling of the liquid can be more accurately recognized by further checking, for example, whether the difference in the temperatures detected by the first and second temperature detection section has been equal to or smaller than a predetermined value.

Moreover, in another mode of the vacuum distillation apparatus of the present invention, the warming section may include a conduit-opening-and-closing section disposed in the vapor-withdrawing conduit between the distillation still and the heat exchange section; a foaming detection section to detect abnormal foaming of the liquid in the distillation still; and a control section to control the conduit-opening-and-closing section to close the vapor-withdrawing conduit for at least a predetermined period of time after the detection of abnormal foaming of the liquid in the distillation still. The aforementioned structure is characterized in that an upper part of the inner wall surfaces of the distillation still is warmed by heat from the vapor of the liquid generated by the boiling in the distillation still.

As an example of the foaming detection section, it is possible to use an optical sensor configured by a light emitter and a light receiver, which establish an optical path in the space within the distillation still in such a manner that, when abnormal foaming occurs, the optical path is blocked by the foam. Alternatively, a pair of electrodes is disposed at a position to be contacted with the foam generated by abnormal foaming so that the abnormal foaming can be detected by determining electric resistance between the electrodes.

In the vacuum distillation apparatus according to the aforementioned mode, heating is started after abnormal foaming due to bumping begins to occur in the distillation still. However, since the vapor-withdrawing conduit is closed by the conduit-opening-and-closing section, it is possible to prevent the foam containing impurities from flowing into the heat exchange section, and thus it is also possible to transfer the vapor of the liquid to the heat exchange section after bumping subsides.

In the case where the heat exchange section or the vapor-withdrawing conduit between the heat exchange section and the conduit-opening-and-closing section is cold at the beginning of transmitting the liquid to the heat exchange section by opening the conduit-opening-and-closing section, bumping possibly occurs again due to sudden condensation and liquefaction as mentioned earlier at those locations.

In order to avoid bumping while heating the heat exchange section or inside the aforementioned conduits, the control section may control the conduit-opening-and-closing section so that the conduit-opening-and-closing section is initially opened and closed in an intermittent manner and then brought to a continuous open state, in the course of opening the conduit-opening-and-closing section after closing it for the aforementioned predetermined period of time. Alternatively, the control section may control the conduit-opening-and-closing section so that the conduit-opening-and-closing section is initially opened in a gradual or stepwise manner and then brought to a continuous open state, in the course of opening the conduit-opening-and-closing section after closing it for the aforementioned predetermined period of time. In any of these two cases, there is no probability that a large amount of vapor suddenly flows into the heat exchange section upon opening the conduit-opening-and-closing section from the closed state. Therefore, a sudden decrease of the gas pressure in the distillation still can be prevented, making it possible to avoid the recurrence of bumping.

Application of the vacuum distillation method according to the first aspect of the present invention or the vacuum distillation apparatus according to the second aspect of the present invention makes it possible to prevent foam generated by bumping from arriving at the heat exchange section even in the case where bumping of the liquid is almost going to occur or has actually occurred in the distillation still for a short period of time, and also makes it possible to suppress bumping to resume to a normal boiling state so that the vapor of the liquid is allowed to be transferred to the heat exchange section. Therefore, even if the original liquid, for example a solvent and the like contains impurities such as sludge, soap, and/or a water repellent agent, the influx of those impurities into the heat exchange section can be avoided. As a result, it is possible to constantly collect a purely distilled liquid containing no such impurities.

Furthermore, since the collected liquid does not contain soap or sludge, it is possible to avoid problems such as failure to reduce pressures due to cavitation of the pump caused by abnormal foaming of the liquid, or the clogging of the nozzle of the ejector with sludge. Application of the vacuum distillation method according to the first aspect of the present invention or the vacuum distillation apparatus according to the second aspect of the present invention also improves the efficiency of the distilling operation by reliably stopping the bumping; the time consumed for the preheating can be easily compensated for by the improved efficiency of the subsequent distillation process.

### BRIEF DESCRIPTION OF THE DRAWINGS

Fig. 1 is a structural diagram showing one embodiment of the vacuum distillation apparatus of the present invention, focusing on a piping route thereof.
Fig. 2 is a structural chart showing a control system of the vacuum distillation apparatus according to the embodiment.
Fig. 3 is a graph showing one example of changes in the temperature of an upper space of the distillation still and in the temperature of a solvent in the distillation still at the early stage of distillation process in the vacuum distillation apparatus of the present embodiment.
Fig. 4 is a control flowchart of the early stage of the distillation process of the vacuum distillation apparatus according to the embodiment.
Fig. 5 is a structural diagram showing the main part of a vacuum distillation apparatus centered on a distillation still according to another embodiment.
Fig. 6 is a structural diagram showing the main part of a vacuum distillation apparatus centered on a distillation still according to another embodiment.
Fig. 7 is a structural diagram showing the main part of a vacuum distillation apparatus centered on a distillation still according to another embodiment.
Fig. 8 is a structural diagram showing the main part of a vacuum distillation apparatus centered on a distillation still according to another embodiment.

### DETAILED DESCRIPTION OF PREFERRED EMBODIMENTS

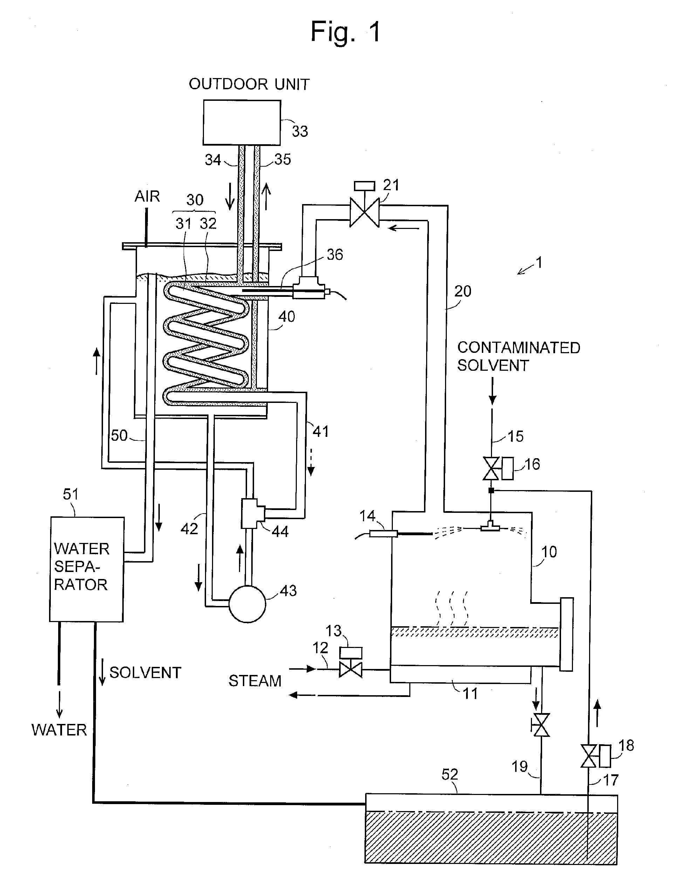

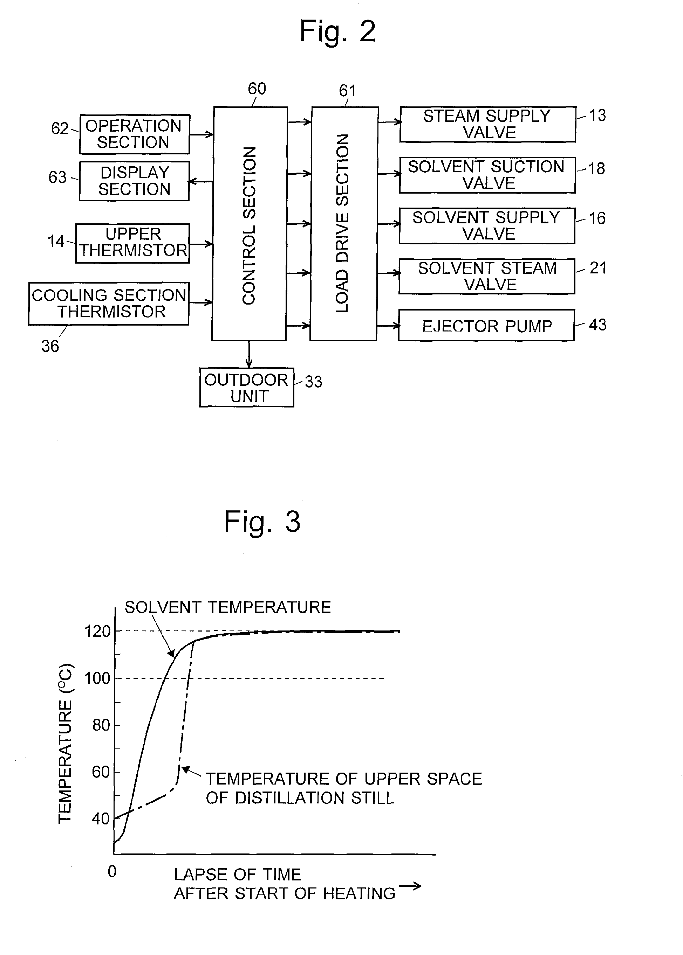

The following description will discuss one embodiment of the vacuum distillation apparatus of the present invention with reference to Figs. 1-4. Fig. 1 is a structural diagram showing the vacuum distillation apparatus according to the present embodiment, focusing on the piping route thereof; and Fig. 2 is a structural chart showing a control system of the vacuum distillation apparatus according to the embodiment. In this embodiment, the liquid to be treated of the present invention is a solvent, such as a petroleum solvent or a silicone solvent, used in a dry cleaning machine.

In a vacuum distillation apparatus 1 according to the present embodiment, a heating chamber 11 which is heated by high-temperature steam supplied via a steam supply pipe 12 while a steam supply valve 13 is open is provided at the bottom portion of a sealable distillation still 10. The distillation still 10 is connected to a solvent supply pipe 15 and a solvent suction pipe 17, and upon the opening of a solvent supply valve 16, contaminated solvents are introduced via the solvent supply pipe 15 and distributed over the inner space of the distillation still 10. On the other hand, when the decompression of the distillation still 10 is performed with a solvent suction valve 18 opened, the solvent stored in a solvent tank 52 is withdrawn through the solvent suction pipe 17, and then distributed over the inner space the distillation still 10.

One end of a solvent vapor withdrawal conduit 20 (which corresponds to the vapor-withdrawing conduit of the present invention) is connected to the ceiling surface of the distillation still 10, and the other end is connected to an inner pipe 31 of a double-tube structure 30, that will be described later, and a solvent vapor valve 21 (conduit-opening-and-closing section of the present invention) is disposed in the solvent vapor withdrawal conduit 20. Further, as the temperature detection section or the first temperature detection section of the present invention, an upper thermistor 14 is disposed in an inwardly projecting manner in the upper space in the distillation still 10.

The heat exchange section to condense and liquefy the high temperature (approximately 90° to 110°C) solvent vapor transferred from the distillation still 10 via the solvent vapor withdrawal conduit 20 includes the double-tube structure 30 in which a double tube of a cylindrical inner pipe 31 and a cylindrical outer pipe 32 are formed in spirals; an outdoor unit 33 installed, for example, in the open air; a refrigerant supply pipe 34 to supply a low temperature (for example, approximately -20° to 0°C) refrigerant gas from the outdoor unit 33 into the outer pipe 32; and a refrigerant collection pipe 35 to return the refrigerant gas to the outdoor unit 33 after the gas has passed through the outer pipe 32 and finished heat-exchanging. The double-tube structure 30 is installed inside the buffer tank 40 in which the solvent is stored. In a steady state, the double-tube structure 30 is completely immersed in the solvent stored in the buffer tank 40. Accordingly, the refrigerant gas flowing through the outer pipe 32 cools not only the solvent vapor introduced in the inner pipe 31 but also the solvent stored in the buffer tank 40. Moreover, a cooling section thermistor 36 is installed at the connection portion between the solvent vapor withdrawal conduit 20 and the inner pipe 31 of the double-tube structure 30, with its tip sticking into the inner pipe 31 so that it can detect the temperature of the solvent vapor immediately before the solvent vapor is condensed and liquefied.

The solvent, which has been condensed and liquefied while passing through the inner pipe 31 of the double-tube structure 30, is introduced to the ejector 44 via a recycled solvent collection conduit 41. The ejector 44 is disposed in a recycled solvent circulation conduit 42, whose outlet end and inlet end are connected to the buffer tank 40, and the ejector 44 functions as the decompression section of the present invention in combination with an ejector pump 43 disposed on the upstream side of the ejector 44. More specifically, when the ejector pump 43 is working, the solvent in the buffer tank 40 is pumped to circulate into the recycled solvent circulation conduit 42 in the direction shown by the arrows in Fig. 1, creating a negative pressure in the ejector 44. By this negative pressure, the just condensed and liquefied solvent is withdrawn from the recycled solvent collection conduit 41 into the recycled solvent circulation conduit 42, which is accompanied by the withdrawal of the solvent vapor in the solvent vapor withdrawal conduit 20 into the inner pipe 31 of the double-tube structure 30. As a result, a vacuum is drawn to reduce the pressure in the distillation still 10. The decompression action enables the withdrawal of the solvent from the solvent tank 52 through the solvent suction pipe 17 so that the solvent is introduced into the distillation still 10.

Although, the just condensed and liquefied solvent that is introduced to pass through the recycled solvent collection conduit 41 has a relatively high temperature, the temperature is lowered when the solvent is mixed through the ejector 44 with the solvent in the circulation conduit 42. On the other hand, the solvent in the recycled solvent circulation conduit 42 has its temperature raised by heat provided by the recycled solvent as previously described as well as heat provided by the ejector pump 43 and the like, and then the solvent returns to the buffer tank 40.At this stage, since the solvent in the buffer tank 40 is cooled by the refrigerant gas supplied to the outer pipe 32 of the double-tube structure 30 as explained earlier, the temperature of the solvents as a whole is constantly maintained. The level of the solvent in the buffer tank 40 rises along with the addition of the recycled solvent collected by distillation. A portion of the solvent surpassing the level of the top opening of a solvent overflow conduit 50 flows out from the buffer tank 40 to be conveyed to a water separator 51, and after the moisture is separated, the resulting solvent is returned to the solvent tank 52. Accordingly, it is possible to recover the solvent having a relatively constant temperature in the solvent tank 52.

Next, a structure of the control system of the vacuum distillation apparatus 1 will be described with reference to Fig. 2. A control section 60 (corresponding to the control section of the present invention) including a CPU as the center is installed in the center of the control system. The control section 60 receives an operation signal that is input at an operation section 62 provided with various buttons to be operated by an operator. Also, the control section 60 receives a temperature detection signal from each of the upper thermistor 14 and the cooling section thermistor 36. Moreover the control section 60 sends display control signals to a display section 63 for monitoring operational conditions and the like. Furthermore, the control section 60 controls the opening-and-closing motion of each of the aforementioned valves such as the steam supply valve 13, solvent supply valve 16, solvent suction valve 18, and solvent vapor valve 21, via a load drive section 61, and also controls the operation of the ejector pump 43. Additionally, the control section 60 controls operations of the outdoor unit 33 so as to send the refrigerant gas to the outer pipe 32 of the double-tube structure 30 at the proper timing.

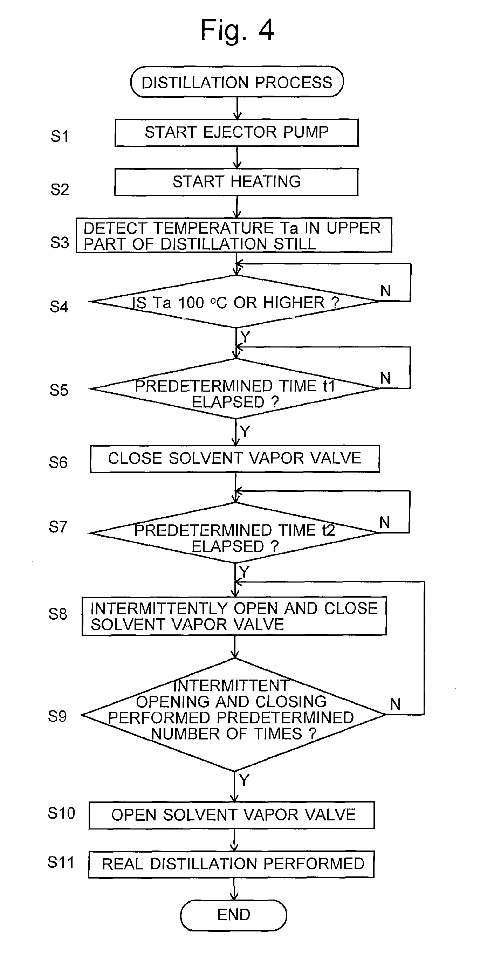

Next, the following description will discuss characteristic operations of the vacuum distillation apparatus of the present example with reference to Figs. 3 and 4. Fig. 4 is a control flowchart of the early stage of the distillation process of the vacuum distillation apparatus according to the present embodiment. Fig. 3 is a graph showing one example of the changes in the temperature of the upper space of the distillation still and the temperature of the solvent in the distillation still, in the early stage of the distillation process. Here, a condition in the early stage refers to a condition where the vacuum distillation apparatus 1 as a unit is cold. This condition may be assumed to correspond to, for example, a condition where the vacuum distillation still 1 is driven to start operation first thing in the morning.

First, in order to initially introduce an appropriate amount of solvent into the distillation still 10, the solvent supply valve 16 is opened with the solvent suction valve 18 closed so that the solvent is supplied into the distillation still 10 via the solvent supply pipe 15. In the vacuum distillation apparatus 1, the solvent supply pipe 15 is configured so that it distributes the solvent on the upper thermistor 14 in the distillation still 10. This configuration makes it possible to initially lower the temperature of the upper thermistor 14 for each cycle of continuously repeated operations.

When, for example, an operator gives the command to start the distillation process at the operation section 62 after the appropriate amount of solvent has been introduced into the distillation still 10, the control section 60 signals the ejector pump 43 to start running in response to the command (Step S1). As a result, the air inside the recycled solvent collection conduit 41 is withdrawn through the ejector 44, and thus the gas pressure inside the distillation still 10 begins to decrease. In the case where the solvent vapor valve 21 is closed, the valve needs to be opened before the ejector pump 43 begins operating. Thereafter, the steam supply valve 13 is opened to introduce high temperature steam into the heating chamber 11, initiating the heating of the solvent having been introduced into the distillation still 10 (Step S2). After the initiation of heating, the control section 60 reads the temperature Ta in the upper space of the distillation still 10 detected by the upper thermistor 14 (Step S3), and repeatedly determines as to whether the temperature Ta is a predetermined threshold value of 100°C or higher (Step S4).

Here, changes in the temperature of the solvent and the temperature (temperature Ta detected by the upper thermistor 14) of the upper space in the distillation still 10 after the start of heating are described with reference to Fig. 3. Since the heating chamber 11 directly heats the bottom portion of the distillation still 10, the temperature of the solvent stored in the distillation still 10 is sharply increased due to thermal conduction from the heating chamber 11 at the beginning of heating. Meanwhile, the boiling point of the solvent, that is approximately 170°C under normal pressure, decreases to approximately 120°C under low vacuum conditions. Due to the reduction of the pressure inside the distillation still 10 as mentioned above, the boiling point of the solvent decreases asymptotically to 120°C as shown in Fig. 3. On the other hand, at the early stage, the temperature of the upper space in the distillation still 10 rises rather slowly. In particular, when the pressure in the distillation still 10 is reduced, densities of various kinds of molecules in the air, which contribute to thermal conduction, are reduced. For this reason, the heat conduction is further reduced, and therefore the upper space temperature rises rather slowly. Furthermore, since temperatures of the inner surfaces of the ceiling wall and the sidewall of the distillation still 10 hardly rise because of the vaporization heat loss from those surfaces caused by the evaporation of the attached solvents due to the decompression, the upper space temperature in the distillation still 10 hardly rises.

After the temperature of the solvent has been increased and the solvent starts boiling, the solvent actively generates vapor so that the upper thermistor 14 is successively exposed to a large amount of the solvent vapor. When the solvent vapor is condensed and liquefied upon contact with the upper thermistor 14, the heat of condensation is transferred to the upper thermistor 14 so as to raise its temperature. As a result, after the solvent starts boiling, the temperature of the upper space in the distillation still 10 shows a rapid increase as shown in Fig. 3 in contrast to the slow increase before the boiling. The upper space temperature rises to almost the same temperature as that of the solvent, and thereafter the temperature shifts almost in the same manner as the temperature of the solvent. Therefore, it is possible to determine the start of boiling of the solvent based on the rapid increase of the detection temperature Ta obtained by the upper thermistor 14. Here, boiling of the solvent is determined when the detection temperature Ta reaches 100°C, and after this determination, the control process is shifted from S4 to S5.

The start of boiling of the solvent does not immediately cause serious bumping. Therefore, as long as no serious problem occurs, it is desirable to further reduce the pressure in the distillation still 10 to achieve the highest possible distillation efficiency. For this reason, the control section 60 suspends the operation of closing the solvent vapor valve 21 for a predetermined time t1 (Step S5) from the detection of the start of boiling in Step S4, and after the lapse of the predetermined time t1, the control section 60 closes the solvent vapor valve 21 (Step S6). Here, the predetermined time t1 is preferably changed depending on structural factors such as volume of the distillation still 10 and heat capacity of the double-tube structure 30 which is the heat exchange section, and thus the value of t1 may be empirically decided by using an actual apparatus. For example, t1 is five seconds in the present example.

When the solvent vapor valve 21 is closed, a withdrawing effect of the ejector 44 does not reach the distillation still 10, and therefore the solvent vapor does not flow out of the distillation still 10. As a result, space in the distillation still 10 and space between the distillation still 10 and the solvent vapor valve 21 in the solvent vapor withdrawal conduit 20 are filled with the solvent vapor. Since the inner surfaces of the ceiling wall and the sidewall of the distillation still 10 are cold and also the vaporization heat is deprived thereof at the beginning as explained earlier, the temperature rise is slow, with the result that the solvent vapor is cooled to be condensed and liquefied on the inner surfaces of the ceiling wall and the sidewall of the distillation still 10. Here, because of the large amount of solvent vapor, the amount of the condensed and liquefied solvent vapor is large, and thus the gas pressure in the distillation still 10 is reduced, leading to the further lowering of the boiling point of the solvent. Namely, after closure of the solvent vapor valve 21, bumping occurs with the accompaniment of the generation of foam in the distillation still 10. However, since the solvent vapor valve 21 is closed, there is no risk of the transfer of impurities such as sludge or soap contained in the foam into the double-tube structure 30.

On the other hand, when the solvent vapor is condensed and liquefied on the inner surfaces of the ceiling wall and the sidewall of the distillation still 10, the heat of condensation is provided to those surfaces as described earlier. Accordingly, more active condensation and liquefaction of the solvent vapor result in a faster rise in the temperatures thereof. After the temperatures of the ceiling wall surface and the sidewall surface are sufficiently raised, condensation and liquefaction of the solvent vapor no longer occurs. Therefore, the gas pressure in the distillation still 10 stops decreasing (and then it may increase in some cases), whereby bumping is suppressed and the boiling state returns to normal.

The control section 60 suspends the operation of opening the solvent vapor valve 21 for a predetermined time t2 from the closure of the solvent vapor valve 21 (Step S7). The control section 60 recognizes that the boiling state returns to normal upon the lapse of the predetermined time t2, and then opens the solvent vapor valve 21. Since the time required for the bumping to calm down depends on the volume of the distillation still 10 and the like, it is preferable that the time is experimentally determined by using an actual apparatus. In the present case, the time t2 may be two minutes.

Upon opening the solvent vapor valve 21, the solvent vapor flows from the distillation still 10 into the inner pipe 31 of the double-tube structure 30. In the case where wall surfaces in the inner pipe 31 of the double-tube structure 30 or wall surfaces in the solvent vapor withdrawal conduit 20 between the solvent vapor valve 21 and the inner pipe 31 are cold, the solvent vapor is suddenly condensed and liquefied therein so that the gas pressure in the distillation still 10 is reduced rapidly to possibly cause bumping again. To avoid this occurrence, the solvent vapor valve 21 is not left open but is intermittently opened and closed, for example, by repeating several seconds of opening and several seconds of closing for two to three times or more (Steps S8 and S9). The solvent vapor flowing in upon the opening of the solvent vapor valve 21 is possibly condensed and liquefied suddenly in the inner pipe 31 or on the wall surfaces of the solvent vapor withdrawal conduit 20. However, since supply of the solvent vapor does not last long and the gas pressure in the distillation still 10 does not decrease after the solvent vapor valve 21 is closed, no bumping of the solvent occurs in the distillation still 10 and thus normal boiling continues.

While repeating the intermittent opening and closing of the solvent vapor valve 21 in the aforementioned manner, the temperature of the inner pipe 31 of the double-tube structure 30 and the temperature of the wall surface of the solvent vapor withdrawal conduit 20 are sufficiently increased, and thus the occurrence of condensation and liquefaction of the solvent vapor is decreased. Thereafter, the solvent vapor valve 21 is fully opened (Step S 10) to allow the solvent vapor to start flowing continuously into the inner pipe 31 of the double-tube structure 30. The control section 60 signals the outdoor unit 33 at an appropriate timing to supply refrigerant gas into the outer pipe 32 of the double-tube structure 30, thereby the solvent vapor passing thorough the inner pipe 31 is cooled to be condensed and liquefied. Accordingly, the real distillation of the solvent is performed, and thereafter the solvent which has been condensed and liquefied in the inner pipe 31 is withdrawn by the ejector 44 and collected in the buffer tank 40 (Step S 11).

Meanwhile, when the amount of the solvent vapor supplied to the inner pipe 31 of the double-tube structure 30 suddenly drops due to depletion of the solvent in the distillation still 10, the temperature detected by the cooling section thermistor 36 sharply drops. Based on the aforementioned detected temperature, the control section 60 determines that the remaining amount of solvent in the distillation still 10 is low, and in the case of continuous distillation, the control section 60 opens the solvent suction valve 18 for a predetermined period of time. With this operation, the solvent stored in the solvent tank 52 is sucked into the distillation still 10 which is under reduced pressure, thereby allowing continuous distillation of the solvent. In this manner, distillation of the solvent can be repeatedly performed.

As explained thus far, the vacuum distillation apparatus 1 according to the present embodiment can prevent sludge or soap mixed in the solvent due to bumping from being transferred to the inner pipe 31 of the double-tube structure 30. Therefore the purity of the solvent collected in the buffer tank 40 can be improved. Moreover, since the amount of soap mixed in the solvent in the buffer tank 40 can be reduced, it is possible to avoid cavitation of the ejector pump 43 due to foaming of the solvent, thereby preventing the problem of decompression failure. Furthermore, the clogging of the nozzle of the ejector 44 with sludge can be avoided. Still furthermore, since no major structural change on a conventional vacuum distillation apparatus is required except for the addition of the solvent vapor valve 21 to the solvent vapor withdrawal conduit 20, the cost increase required to suppress bumping can be reduced advantageously.

In the case of using a valve which can control an opening degree, or in other words an amount of gas flow passing through the solvent vapor valve 21, the same effects as mentioned previously may be obtained by gradually or in a stepwise manner increasing the opening degree, instead of intermittently opening and closing the solvent vapor valve 21 in Steps S8 and S9, and fully opening the solvent vapor valve 21 after the lapse of a predetermined time.

Although, detection of the start of the boiling of the solvent in the distillation still 10 is based only on the temperature detected by the upper thermistor 14 in the aforementioned embodiment, preferably, the temperature of the solvent may also be used to more accurately judge the timing of the start of the boiling of the solvent.

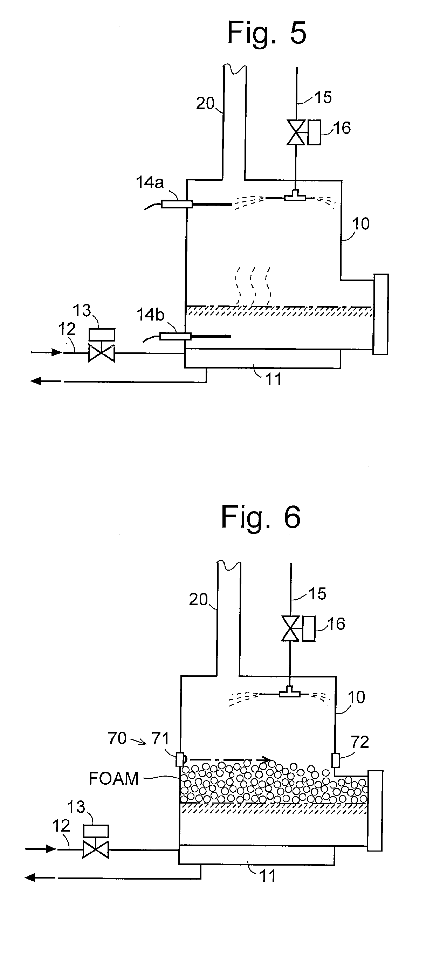

Fig. 5 is a structural diagram showing the main part of a vacuum distillation apparatus centered on a distillation still according to another embodiment of the present invention. Structures other than those shown in the figure are the same as the structures shown in Fig. 1, and thus depictions thereof are omitted. In this structure, in addition to the upper thermistor 14a, another thermistor (lower thermistor) 14b for detecting a solvent temperature is provided in the distillation still 10 at a level where the thermistor 14b is to be immersed in the solvent introduced to the distillation still 10. The difference in the detection temperatures obtained by the thermistor 14a and the thermistor 14b is calculated by the control section 60. When the calculated value is equal to or smaller than the predetermined threshold value, the control section 60 determines that the solvent has started boiling and closes the solvent vapor valve 21 to trap the solvent vapor in the distillation still 10 so as to accelerate the temperature rise of the ceiling wall surface and the side-wall surface of the distillation still 10.

In the previous embodiment, the timing of closing the solvent vapor valve 21 is decided based on the detection of the start of the boiling of the solvent in the distillation still 10. Alternatively, the timing to close the solvent vapor valve 21 may be decided by detection of other conditions. Fig. 6 is a structural diagram showing the main part of a vacuum distillation apparatus centered on a distillation still according to yet another embodiment of the present invention. Structures other than those shown in the figure are the same as the structures shown in Fig. 1, and thus depictions thereof are omitted.

In the case of a very contaminated solvent, an abnormal amount of foam is generated when bumping occurs in the distillation still 10 as illustrated in Fig. 6, and the foam possibly overflows from the distillation still 10 and then reaches the inner pipe 31 of the double-tube structure 30. Therefore, in order to detect at an early stage the abnormal foaming in the distillation still 10, in the structure of Fig. 6, an optical sensor 70 including a light-emitter 71 and a light-receiver 72, both of which are attached on the wall surface of the distillation still 10, is utilized. In other words, when no abnormal foaming occurs, light emitted from the light-emitting portion 71 reaches the light-receiving portion 72 almost without fading, resulting in a received light with a high intensity, whereas when foam generated by abnormal foaming is present on the optical path, reflection, scattering or absorption of a part of the light occurs, and thus the intensity of the received light is decreased. Based on this, the control section 60 determines the presence or absence of abnormal foaming by judging the intensity of the received light at the optical sensor 70, and when the control section 60 determines the occurrence of abnormal foaming, it closes the solvent vapor valve 21. Accordingly, it is possible to prevent impurities from being transferred to the inner pipe 31 of the double-tube structure 30 with the foam. At the same time, by inducing the temperature rise of the inner surfaces of the ceiling wall and the sidewall of the distillation still 10, the occurrence of bumping can be suppressed.

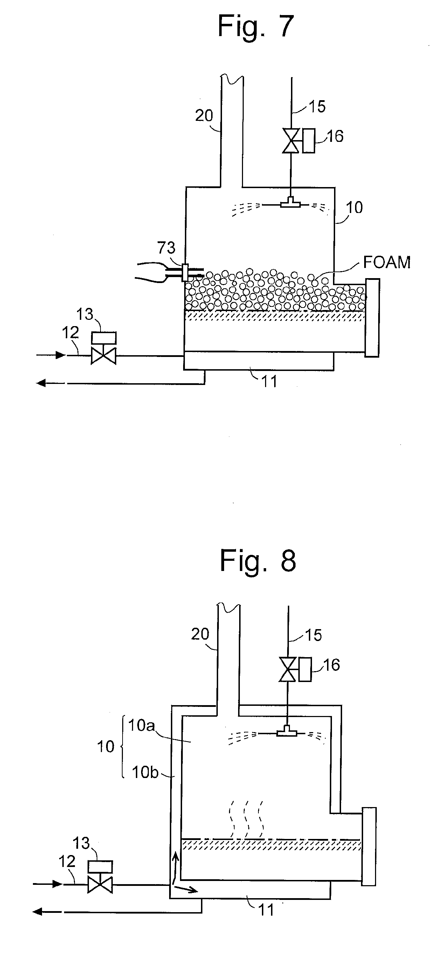

Fig. 7 is a structural diagram showing the main part centered on the distillation still of a vacuum distillation apparatus in which another means is used to detect abnormal foaming. In this structure, two rod electrodes 73 are disposed at a predetermined position located above the normal surface level of the solvent in the distillation still 10, and the control section 60 determines the electric resistance between the two electrodes 73. When abnormal foaming occurs and the space between the two electrodes 73 is filled with foam, the electric resistance is reduced. Therefore, upon detection of the abnormal foaming based on the reduction of the electric resistance, the solvent vapor valve 21 may be properly closed.

Moreover, in the vacuum distillation apparatus according to each of the aforementioned embodiments, the solvent vapor is allowed to fill the distillation still 10 by closing the solvent vapor valve 21, and by vigorously and continuously boiling the solvent in the distillation still 10, the inner surfaces of the ceiling wall and the sidewall of the distillation still 10 are heated due to the heat of condensation provided thereto. Here, alternatively, a means of more directly heating the inner surfaces of the ceiling wall and the sidewall of the distillation still 10 may be employed. Fig. 8 is a structural diagram showing the main part centered on the distillation still 10 of the vacuum distillation apparatus in which the means of this kind is employed.

In this structure, the distillation still 10 has a configuration in which almost all the outer shape of a distillation chamber 10a installed therein is enclosed by a warming chamber 10b that is in communication with the heating chamber 11 at the bottom. The ceiling wall surface and the sidewall surface of the distillation chamber 10a are heated from outside by high temperature steam supplied to the warming chamber 10b. Accordingly, heating of the solvent introduced in the distillation chamber 10a is accompanied by the temperature rise of the ceiling wall surface and the sidewall surface of the distillation chamber 10a, and at the time when the solvent starts boiling and actively generates the solvent vapor, the temperatures of the ceiling wall surface and the sidewall surface have been sufficiently increased. As a result, the solvent vapor is not condensed and liquefied on the ceiling wall surface and the sidewall surface, meaning that the cause of bumping is removed, and thus bumping can be prevented from occurring.

Moreover, although the inner surfaces of the ceiling wall and the sidewall of the distillation chamber 10a are heated by making use of high temperature steam in the previous embodiments, it is obviously possible to heat the inner surfaces of the ceiling wall and the sidewall of the distillation still 10 by other well-known heat sources such as an electric heating apparatus. In the case of utilizing other heat sources, preheating of the distillation still 10 may be performed prior to, as well as after the introduction of the steam into the heating chamber 11 to start heating the solvent. When heating is carried out not by the solvent vapor but by other heat sources, it is not necessary to trap the solvent vapor in the distillation still 10, and further it is possible to assuredly avoid bumping. Therefore, the solvent vapor valve 21 is unnecessary.

Furthermore, as in another structure, the inner surfaces of the ceiling wall and the sidewall of the distillation still 10 can be heated without installation of the solvent vapor valve 21 (or installed but not closed) by heating the solvent introduced into the distillation still 10 in a manner as to keep it boiling strongly (i.e. to intentionally cause bumping of the solvent) so that the inner surfaces of the ceiling wall and the sidewall of the distillation still 10 are provided with the heat of condensation and thus heated. In other words, when a command is given to drive continuous and repeated distillation of the solvent and the operation starts, in the first distillation process, the solvent in an amount smaller than that in the second or later distillation process is introduced into the distillation still 10 to start heating the solvent by supplying steam to the heating chamber. Here, the amount of solvent to be introduced is critical; the amount needs to be limited to the level at which foam abnormally generated by the bumping in the distillation still 10 does not flow into the solvent vapor withdrawal conduit 20. More specifically, the amount is limited to approximately one fifth or less the amount of the solvent to be introduced in the second or later distillation processes.

When the bumping of this small amount of the solvent occurs in the distillation still 10, most of the solvent vapor is condensed and liquefied at the beginning on the cold inner surfaces of the side surface and the ceiling surface of the distillation still 10. Further the solvent vapor flowing into the solvent vapor withdrawal conduit 20 is mostly condensed and liquefied on the wall surfaces of the conduit 20. As a result, almost no solvent vapor reaches the inner pipe 31 of the double-tube structure 30, so that the condensation, liquefaction and collection of the solvent do not practically occur at this stage. Also, even if foam is generated due to bumping, the amount is so small that it is possible to avoid the intrusion of the impurities mixed in the foam into the inner pipe 31 of the double-tube structure 30 through the solvent vapor withdrawal conduit 20. During the aforementioned processes, as the inner surfaces of the ceiling wall and the sidewall of the distillation still 10 are warmed by the heat of condensation provided upon liquefaction of the solvent vapor, the amount of the solvent vapor flowing into the solvent vapor withdrawal conduit 20 is increased, leading to a rise in temperature of the wall surfaces in the solvent vapor withdrawal conduit 20. Accordingly, the amount of the solvent vapor reaching the inner pipe 31 of the double-tube structure 30 is gradually increased, resulting in gradual increases of the temperature of the wall surfaces in the inner pipe 31. In this manner, as the temperature inside the pipes increases, the occurrence of bumping in the distillation still 10 is gradually reduced to a normal boiling state, thereby a full-scale distillation and collection of the solvent follows thereafter.

With this structure, it is possible to reduce the amount of impurities mixed in the recycled solvent only by controlling the amount of the solvent to be introduced into the distillation still 10, or in other words, only by changing the control program of the control section 60. Therefore, this structure is advantageous in that the cost increase for installation of apparatuses is minimal.

Each of the aforementioned embodiments should be interpreted as merely one example of the present invention, and therefore it is obvious that those embodiments with proper modification, correction and addition within the aspects of the present invention are also included in the claims of the present application.

## Claims

1. A vacuum distillation method for distilling and collecting a liquid, comprising:
evaporating a liquid to be treated, by heating the liquid under reduced pressure in a distillation still provided with a heater section at a bottom thereof;
withdrawing vapor of the liquid from said distillation still; and
cooling the vapor at a heat exchange section to condense and liquefy the vapor,
wherein
all or part of inner wall surfaces of the distillation still not directly heated by said heater section are warmed before the liquid to be treated is introduced into the distillation still, or before the liquid having been introduced into the distillation still is substantially distilled by heating at the heater section and cooling at the heat exchange section.

2. A vacuum distillation apparatus for distilling and collecting a liquid, comprising:
a distillation still provided with a heater section at a bottom thereof for evaporating a liquid to be treated introduced into the distillation still;
a decompression section to reduce a pressure in said distillation still by withdrawing gases from the distillation still through a vapor-withdrawing conduit connected to the distillation still; and
a heat exchange section to cool, condense and liquefy the vapor of the liquid having been withdrawn from the distillation still by a withdrawing action of said decompression section, said heat exchange section being disposed in the vapor-withdrawing conduit,
wherein
the vacuum distillation apparatus has a warming section to warm all or part of inner wall surfaces of the distillation still not directly heated by said heater section, before the liquid to be treated is introduced into the distillation still, or before the liquid having been introduced into the distillation still is substantially distilled by heating at the heater section and cooling at the heat exchange section.

3. The vacuum distillation apparatus according to claim 2, wherein:
said warming section comprises
a conduit-opening-and-closing section disposed in the vapor-withdrawing conduit between the distillation still and the heat exchange section;
a boiling detection section to detect start of boiling of the liquid caused by heating at the heater section in the distillation still; and
a control section to control said conduit-opening-and-closing section to close the vapor-withdrawing conduit for at least a predetermined period of time after the detection of the start of the boiling of the liquid in the distillation still, and
an upper part of the inner wall surfaces of the distillation still is warmed by heat from the vapor of the liquid generated by the boiling in the distillation still.

4. The vacuum distillation apparatus according to claim 3, wherein:
said boiling detection section comprises
a temperature detection section to detect a temperature of an upper space in the distillation still; and
a determination section to recognize the start of boiling by determining a temperature rise detected by said temperature detection section.

5. The vacuum distillation apparatus according to claim 3, wherein:
said boiling detection section comprises
a first temperature detection section to detect a temperature of an upper space in the distillation still;
a second temperature detection section to detect a temperature of the liquid in the distillation still; and
a determination section to recognize the start of boiling by determining a difference between the temperature detected by the first temperature detection section and the temperature detected by the second temperature detection section.

6. The vacuum distillation apparatus according to claim 2, wherein:
said warming section comprises
a conduit-opening-and-closing section disposed in the vapor-withdrawing conduit between the distillation still and the heat exchange section;
a foaming detection section to detect abnormal foaming of the liquid in the distillation still; and
a control section to control said conduit-opening-and-closing section to close the vapor-withdrawing conduit for at least a predetermined period of time after the detection of abnormal foaming of the liquid in the distillation still, and
an upper part of the inner wall surfaces of the distillation still is warmed by heat from the vapor of the liquid generated by the boiling in the distillation still.

7. The vacuum distillation apparatus according to claim 2, wherein:
said warming section is a supplementary heating section sharing the same heat source with the aforementioned heater section or utilizing another heat source.

8. The vacuum distillation apparatus according to claim 3 or 6, wherein,
said control section controls said conduit-opening-and-closing section so that the conduit-opening-and-closing section is initially opened and closed in an intermittent manner and then brought to a continuous open state, in the course of opening the conduit-opening-and-closing section after closing it for the aforementioned predetermined period of time.

9. The vacuum distillation apparatus according to claim 3 or 6, wherein,
said control section controls said conduit-opening-and-closing section so that the conduit-opening-and-closing section is initially opened in a gradual or stepwise manner and then brought to a continuous open state, in the course of opening the conduit-opening-and-closing section after closing it for the aforementioned predetermined period of time.
